Europäisches Patentamt

European Patent Office

Office européen des brevets

(11) Publication number: **0 148 979**
**B1**

(12) **EUROPEAN PATENT SPECIFICATION**

(45) Date of publication of patent specification: **09.05.90**

(21) Application number: **84106969.3**

(22) Date of filing: **18.06.84**

(51) Int. Cl.⁵: **B 62 K 19/36** // A63B69/16

(54) **Locking attachment for adjustable height bicycle type saddle assembly.**

(30) Priority: **24.10.83 US 544462**

(43) Date of publication of application:
**24.07.85 Bulletin 85/30**

(45) Publication of the grant of the patent:
**09.05.90 Bulletin 90/19**

(84) Designated Contracting States:
**DE GB SE**

(56) References cited:
**EP-A-0 060 750**
**FR-A- 419 655**
**FR-A- 470 907**
**GB-A-2 116 128**
**NL-A-7 612 962**

(73) Proprietor: **EXCELSIOR FITNESS EQUIPMENT CO.**
**613 Academy Drive**
**Northbrook Illinois 60062 (US)**

(72) Inventor: **Szymski, Eugene J.**
**9453 North Lawler**
**Skokie Illinois 60077 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The invention concerns bicycle type saddle assemblies of the kind used on bicycles and bicycle type exercisers. Typically these have a seat on a post telescopically slidable in an upstanding tubular seat mast to adjust the seat height.

The conventional saddle assembly is held at a selected height by a clamp which squeezes a split upper portion of the seat mast into frictional, gripping engagement with the seat post. The clamp is not positively locking; it depends solely on friction to hold the saddle assembly. Considerable manual effort and special tools are often required to tighten it safely.

A serious drawback of this conventional clamp is the difficulty of tightening the clamp so the mast will be held firmly. To enable adequate tightening, some clamps require wrenches; others have long, permanently attached handles. None are completely satisfactory. Wrenches are often misplaced. The long handles require substantial room to swing. Even with these, many people cannot or do not tighten them sufficiently.

A typical clamp is shown in NL—A—7612962. A tube (1) could be considered a seat post and a telescoping tube (2) might be considered a seat mast but the locking arrangement (4) is completely different than the improved locking attachment of the present invention. While the post includes apertures (8) in which a pin (6) could be adjustably secured at different relative heights, the spring biased locking pin does not provide the improved tight frictional engagement of applicants pin to secure the seat mast and seat post relative to each other with the frictional locking arrangement preventing the seat post from rattling loose in use.

Accordingly, the present invention provides a locking attachment for an adjustable height bicycle type saddle assembly which can be locked and released without tools with little effort, and which holds safely and positively even if not tightened completely.

In particular, the invention provides an adjustable height saddle assembly for a bicycle-type exerciser apparatus, including a seat post having a plurality of holes spaced apart along the length thereof, a tubular seat mast having a thickened reinforcing collar having therein aperture means selectively registerable with the holes of the seat post at different adjusted heights of the saddle assembly, the seat post being telescopically slidable in the seat mast, and a locking attachment including a locking member for locking the seat post against the seat mast at the adjusted heights, the locking member including a lock pin engageable with a corresponding one of the holes and the aperture when a selected one of the holes is registered with the aperture means, characterized in that one of the apertures has internal screw threads, an external screw-threaded portion of the locking member is threadedly engageable with the threaded aperture, a shoulder between the screw-threaded portion and the lock pin is engageable with the outside of the seat post to eliminate free play between seat post and seat mast, and a manually rotatable knob is connected to the screw-threaded portion; and said screw-threaded portion has an axial length substantially greater than the thickness of the reinforcing collar surrounding said threaded aperture.

In the accompanying drawings:

Figure 1 is a fragmentary side view of a bicycle type exerciser illustrating one form of the present invention; and

Figure 2 is an upright, sectional view of Figure 1 taken along line 2—2.

Referring now more particularly to the specific embodiment of the invention shown in the drawing, a bicycle type exerciser (not shown) has a saddle assembly 22 including a seat 24 on a seat post 26 telescopically slidable in an upstanding tubular seat mast 28.

The saddle assembly is adjustable to a selected height by a locking attachment generally designed 30 which will now be described.

A unitary, separable locking member generally designated 32 comprises a forwardly extending lock pin 34, a collar 36 with external screw threads 38, a forward shoulder 42, and a manually rotatable knob 44.

The seat mast 28 has a pair of diametrically opposed apertures 46 and 48 in an upper, thickened reinforcing collar 50. Aperture 46 has internal screw threads 52 engageable with external screw theads 38. Aperture 48 is unthreaded in this embodiment.

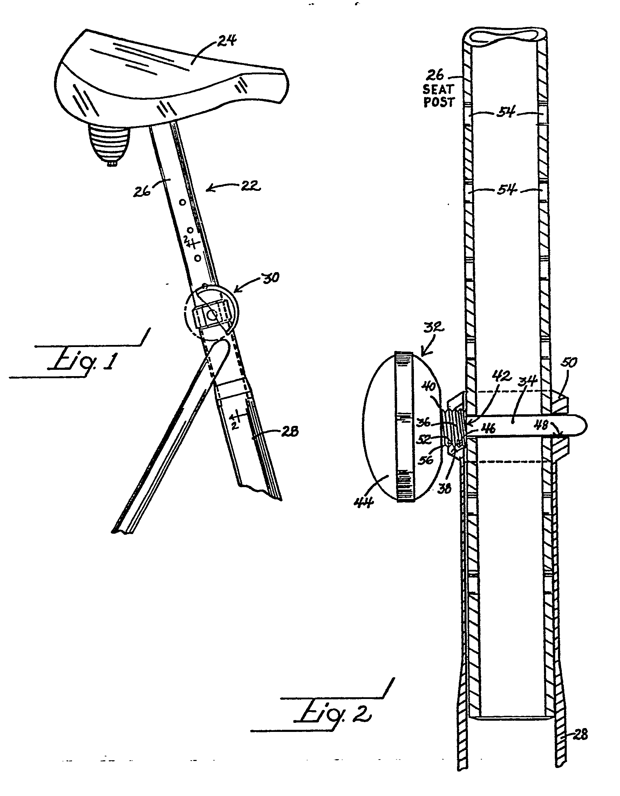

The seat post 26 has a plurality of holes 54 spaced apart along the length of the post. In the present case where the seat post is tubular, the holes 54, 54 are arranged in pairs, diametrically spaced. Alternatively, if the seat post is a solid rod (not shown), they would be single through-holes. For a proper fit to minimize excessive play, the diameters of holes 54 and aperture 48 should be only slightly larger than the diameter of lock pin 34. Also, as shown in Figure 2, the pin 34 should be sufficiently long to engage both hold pairs 54, 54 and the aperture 48.

The forward face 42 of collar 36 engages the seat post 26 and presses it against the far inner surface of the seat mast 28 as shown in Figure 2. This eliminates free play between the seat post and seat mast, limits forward movement of the locking member, and holds it in locked position by frictional engagement with the outer surface of the seat post. The axial length of the threaded collar 36 is substantially greater than the thickness of the reinforcing collar 50 surrounding the threaded aperture 46. This facilitates positive engagement of shoulder 42 with the outside of the seat post.

Use and operation is believed to be obvious from the above description. Briefly, to change the adjusted height of the saddle assembly 22, the user merely grasps the knob 44 and rotates it in a direction to release the threaded connection between external and internal threads 38 and 52, then withdraws the locking member to disengage it completely from the seat post hole pair 54, 54. After raising or lowering the seat post to a new height adjustment where a new pair of holes 54, 54 are in registration with the apertures 46 and 48, the user reinserts the lock pin, re-engages threads 38 and 52 and rotates knob 44 in a tightening direction until stopped by engagement of shoulder face 42 with the seat post. This provides a positive locked connection which will not slip even if only light tightening torque is applied to the knob.

## Claims

1. An adjustable height saddle assembly for a bicycle-type exerciser apparatus, including a seat post (26) havivg a plurality of holes (54) spaced apart along the length thereof, a tubular seat mast (28) having a thickened reinforcing collar (50) having therein aperture means (46, 48) selectively registerable with the holes of the seat post at different adjusted heights of the saddle assembly, the seat post (26) being telescopically slidable in the seat mast (28), and a locking attachment including a locking member (32) for locking the seat post against the seat mast at the adjusted heights, the locking member (32) including a lock pin (34) engageable with a corresponding one of the holes (54) and the aperture (48) when a selected one of the holes (54) is registered with the aperture means (46, 48), characterized in that one (46) of the apertures has internal screw threads (52), an external screw-threaded portion (36) of the locking member (32) is threadedly engageable with the threaded aperture (46), a shoulder (42) between the screw-threaded portion (36) and the lock pin (34) is engageable with the outside of the seat post (26) to eliminate free play between seat post (26) and seat mast (28), and a manually rotatable knob (44) is connected to the screw-threaded portion (36); and said screw-threaded portion (36) has an axial length substantially greater than the thickness of the reinforcing collar (50) surrounding said threaded aperture (46).

2. An adjustable height saddle assembly according to claim 1, characterized in that said aperture means comprises a pair of diametrically opposed apertures (46, 48) in the collar (50) of the tubular seat mast (28), said locking member (32) includes, from front to back, said lock pin (34), said shoulder (42), said external screw-threaded portion (36) in the form of a collar, and said manually rotatable knob (44); said lock pin (34) being long enough to extend through the other aperture (48) in the seat mast (28) opposite the threaded aperture (46), said screw-threaded collar (36) being located on said locking member (32) behind the lock pin (34) and having said external screw threads (38) thereon engageable with said internal screw threads (52) in said one aperture (46); said shoulder (42) being located on said locking member (32) ahead of said external screw threads (38), and being engageable with the seat post wall to eliminate free play, to limit inward movement of the locking member (32), and to hold the same in locked position by frictional engagement; and said knob (44) being located behind the said screw-threaded collar (36) for ready manual access externally of the seat mast (28).

3. An adjustable height saddle assembly according to claim 2, characterized in that the axial length of the screw-threaded collar (36) is substantially greater than the thickness of the wall (50) of the tubular seat mast (28) surrounding said one aperture (46) to facilitate a positive engagement of said shoulder (42) with said seat post (26).

## Patentansprüche

1. Höheneinstellbare Sattelanordnung für ein fahrradähnliches Übungsgerät mit einer Sattelstütze (26), die eine Mehrzahl von über ihre längs in Abständen voneinander angeordneten Löchern (54) besitzt, einem Sitzrohr (28), des einen verdickten Verstärkungsbund (50) mit Öffnungsmitteln (46, 48) besitzt, die in verschiedenen eingestellten Höhen der Sattelanordnung wahlweise mit den Löchern der Sattelstütze (26) korrespondieren können, die in dem Sitzrohr (28) teleskopartig verschiebbar ist, und mit einer angebauten Verriegelungseinrichtung, die ein Verriegelungsglied (32) zum Verriegeln der Sattelstütze mit dem Sitzrohr in den eingestellten Höhenlagen dient, wobei das Verriegelungsglied (32) einen Verriegelungsstift (34) besitzt, der in ein entsprechendes der Löcher (54) mit den Öffnungsmitteln (46, 48) korrespondiert, dadurch gekennzeichnet, daß eine (46) der Öffnungen ein Innengewinde (52) besitzt, daß mit der Gewindeöffnung (46) ein außengewindetragender Teil (36) der Verriegelungsgliedes (32) verschraubbar ist, daß eine Schulter (42) zwischen dem gewindetragenden Teil (36) und dem Verriegelungsstift (34) an die Außenseite der Sattelstütze (26) anstellbar ist, um ein freies Spiel zwischen der Sattelstütze (26) und dem Sitzrohr (28) zu beseitigen, daß mit dem gewindetragenden Teil (36) ein von Hand drehbarer Knopf (44) verbunden ist, und daß die axiale Länge des gewindetragenden Teils (36) beträchtlich größer ist als die Dicke des die Gewindeöffnung (46) umgebenden Verstärkungsbundes (50).

2. Höheneinstellbare Sattelanordnung für ein fahrrad-ähnliches Übungsgerät nach Anspruch 1, dadurch gekennzeichnet, daß die Öffnungsmittel ein Paar von einander diametral entgegengesetzten Öffnungen (46, 48) im Rund (50) des Sitzrohrs (28) umfassen, daß das Verriegelungsglied (32) von vorn nach hinten den Verriegelungsstift (34), die Schulter (42), den außengewindetragenden Teil (36) in Form eines Rundes und den von Hand drehbaren Knopf (44) umfaßt, daß der Verriegelungsstift (34) so lang ist, daß er die der Gewindeöffnung (46) entgegengesetzte, andere Öffnung (48) in dem Sitzrohr (28) durchsetzt, daß der gewindetragende Bund (36) auf dem Verriegelungsglied (32) hinter dem Verriegelungsstift (34) angeordnet ist und das darauf vorgesehene Außengewinde (38) mit dem Innengewinde (52) der einen Öffnung (46) verschraubbar ist, daß die Schulter (42) auf dem Verriegelungsglied (32) vor dem Außengewinde (38) angeordnet ist und an die Wand des Sitzpfostens anstellbar ist, um freies Spiel zu beseitioen, um die Einwärtsbewegung des Verriegelungsgliedes (32) zu begrenzen und um dieses reibungsschlüssig festzulegen, und daß der Knopf (44) hinter dem gewindertragenden Bund (36) angeordnet und daher von der Außenseite des Sitzrohrs (28) von Hand leicht zugänglich ist.

3. Höheneinstellbare Sattelanordnung für ein fahrrad-ähnliches Übungsgerät nach Anspruch 2, durch gekennzeichnet, daß die axiale Länge des gewindetragenden Bundes (36) beträchtlich größer ist als die Dicke der die eine Öffnung (46) umgebenden Wand (50) des Sitzrohrs, um einen formschlüssigen Angriff der Schulter (42) an dem Sitzpfosten (26) zu erleichtern.

**Revendications**

1. Ensemble formant selle de hauter réglable pour un appareil d'exercice du type bicyclette, comportant un tube de selle (26) présentant une pluralité de trous (54) espacés l'un de l'autre sur sa longueur, une barre tubulaire (28) de selle présentant un collet de renfort épaissi (50) dans lequel des ouvertures (46, 48) peuvent être sélectivement alignées avec les trous du tube de selle aux différentes hauteurs ajustées de l'ensemble formant selle, le tube de selle (26) pouvant coulisser télescopiquement dans la barre de selle (28), ainsi qu'un dispositif de verrouillage comportant un organe de verrouillage (32) pour verrouiller le tube de selle par rapport à la barre de selle aux hauteurs ajustées, l'organe de verrouillage (32) comprenant une broche de verrouillage (34) qui peut s'ajuster dans l'un, correspondant, des trous (54) et dans l'ouverture (48) lorsque l'un, sélectionné, des trous (54) est aligné avec les ouvertures (46, 48), caractérisé en ce que l'une (46) des ouvertures présente un filetage intérieur (52), en ce qu'une portion (36), filetée extérieurement, de l'organe de verrouillage (32) se visse dans l'ouverture filetée (46), en ce qu'un épaulement (42), situé entre la portion filetée (36) et la broche de verrouillage (34), peut venir en prise avec la surface extérieure du tube de selle (26) pour éliminer le jeu libre entre le tube de selle (26) et la barre de selle (28), et en ce qu'un bouton (44), que l'on peut faire tourner manuellement, est solidarisé à la portion filetée (36); et en ce que ladite portion filetée (36) a une longueur axiale sensiblement supérieure à l'épaisseur du collet de renfort (50) qui entoure ladite ouverture filetée (46).

2. Ensemble formant selle de hauteur réglable selon la revendication 1, caractérisé en ce que lesdites ouvertures comportent une paire d'ouvertures (46, 48), diamétralement opposées dans le collet (50) de la barre tubulaire (28) de selle; en ce que ledit organe de verrouillage (32) comporte, de l'avant vers l'arrière, ladite broche de verrouillage (34), ledit épaulement (42), ladite portion filetée extérieurement (36) ayant la forme d'un collet, et ledit bouton (44) que l'on peut faire tourner manuellement; ladite broche de verrouillage (34) étant assez longue pour passer à travers l'autre ouverture (48) prévue dans la barre de selle (28) du côté opposé à l'ouverture filetée (46), ledit collet fileté (36) étant situé, sur ledit organe de verrouillage (32), derrière la broche de verrouillage (34) et lesdits filets extérieurs (38) qu'il porte pouvant se visser dans lesdits filets intérieurs (52) prévus dans ladite première ouverture (46); ledit épaulement (42) étant situé, sur ledit organe de verrouillage (32), en avant desdits filets extérieurs (38) et pouvant venir en prise avec la paroi du tube de selle pour éliminer le jeu libre, pour limiter le mouvement intérieur de l'organe de verrouillage (32), et pour maintenir cet organe en position verrouillée par contact de frottement; et ledit bouton (44) étant situé derrière ledit collet fileté (36) pour permettre un accès manuel aisé par l'extérieur du tube de selle (28).

3. Ensemble formant selle de hauteur réglable selon la revendication 2, caractérisé en ce que la longueur axiale du collet fileté (36) est sensiblement supérieure à l'épaisseur de la paroi (50) de la barre tubulaire (28) de selle entourant ladite première ouverture (46) pour faciliter un contact positif de butée entre ledit épaulement (42) et ledit tube de selle (26).

_Fig. 1_

_Fig. 2_